# EUROPEAN PATENT SPECIFICATION

(11) **EP 0 597 518 B1**
(45) Date of publication and mention of the grant of the patent: **17.06.1998**
(21) Application number: 93202986.1
(22) Date of filing: 26.10.1993
(51) Int. Cl.: B01D 25/12, B01D 25/00, B01D 25/38

(54) **Plant for automatically washing plate filter presses**
Anlage zum automatischen Reinigen von Plattenfilterpressen
Installation pour le nettoyage automatique de filtre-presses à plateaux

(30) Priority: 10.11.1992 IT RE920080
(43) Date of publication of application: 18.05.1994
(73) Proprietor: DIEMME S.P.A., I-48022 Lugo Ravenna (IT)
(72) Inventor: Gentili, Luciano, I-47023 Cesena (Forli) (IT)
(74) Representative: Corradini, Corrado

(56) References cited:
- EP-A- 0 307 772
- BE-A- 307 772
- CH-A- 602 158
- GB-A- 2 046 117
- GB-A- 2 227 184

## Description

This invention relates to an automatic plant for washing plate filter presses.

In various sectors of industry, such as the wine industry, the oil industry, marble working and sewage purification, it has been known for some time to use filter presses comprising a plurality of adjacent vertical plates aligned in a horizontal direction between a fixed head and a movable head.

This latter and said plates are able to be moved in said horizontal direction to enable the plates to be clamped together into a pack to define a plurality of filter chambers, or to be spaced apart.

Specifically, each plate comprises in its opposing faces two recesses which define a chamber between two mutually contacting plates and with which a filter cloth is associated to separate the solid part from the liquid part of the fluid material or product to be filtered.

Basically, said cloths divide each chamber into a first region which is connected to a feed duct for the material to be filtered and in which said solid part accumulates, and a second region into which the filtered liquid passes and which is connected to a discharge duct for this latter provided within the body of the plates.

As filtration proceeds, a cake or panel of solid particles forms and is discharged by simply withdrawing (shifting) the plates from each other after halting the feed of the material to be filtered.

Again, as filtration proceeds the filter cloths become increasingly clogged, so that they have to be periodically cleaned.

At this point it should be noted that filter presses exist in which the plates are separated (shifted) one at a time by a suitable shifting unit, and filter presses in which the plates are all separated together by virtue of being all connected to each other and to the heads, for example by two opposing lateral chains or the like.

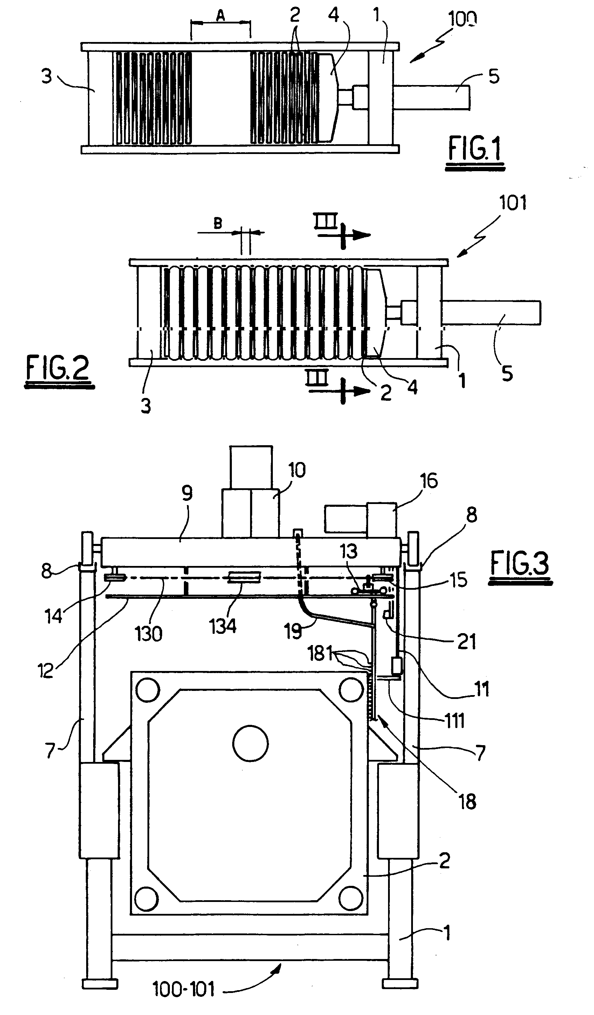

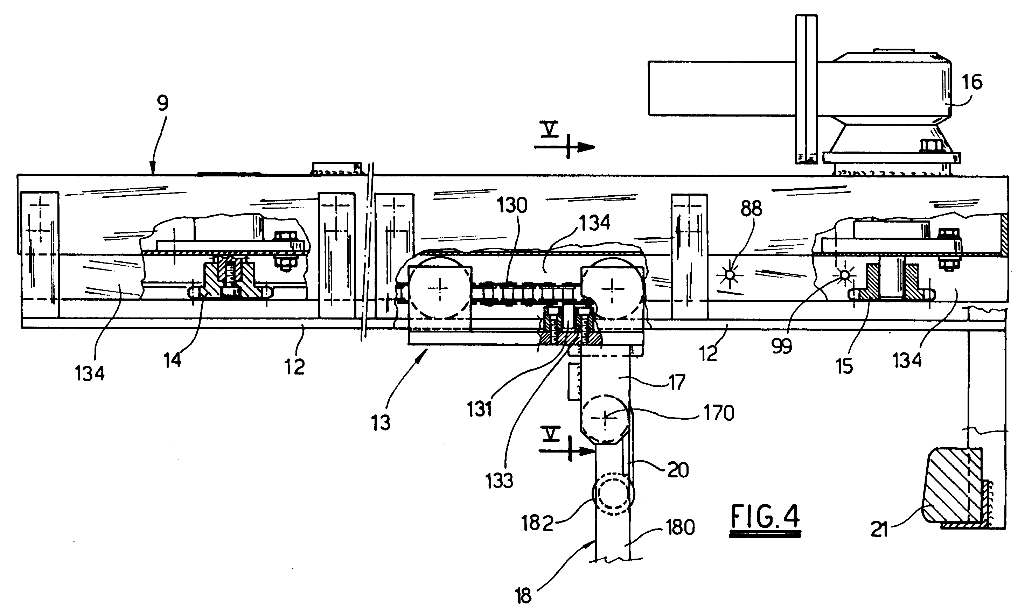

It should also be noted that in said first type of filter press (schematically illustrated in Figure 1) the plates are each spaced from the pack by a distance A substantially between 40 and 60 cm, whereas in the second type of filter press (schematically illustrated in Figure 2) the space B between pairs of adjacent plates is much less than the preceding, and is substantially between 5 and 10 cm.

CH-A-602158 discloses an automatic plant for washing filter presses with vertical plates with respective filter cloths. During filtration the plates are clamped together defining a plurality of filter chambers, while they are being spaced apart one at a time in order to discharge the retained material.

The washing plant includes a moving assembiy located above the plates with an elongated sprayer element.

The sprayer element is able to swivel on a vertical plane parallel to the press plates between a rest position outside the space between two adjacent plates and a vertical working position lying between two adjacent plates.

The moving assembiy comprises a main carriage undergoing longitudinal movement along the press axis.

The said main carriage has the form of an arch structure travelling on two longitudinal rails positioned near the lateral bars on which the filter plates rest.

The top of the arch structure comprises two rails on which a second carriage supporting the swivelling sprayer runs.

The sprayer swivels between a resting horizontal position and a working vertical position by means of a cylinder piston unit.

The second carriage is linked to an endless chain undergoing horizontal movement transverse to the press axis.

The sprayer element which is carried by the second carriage, is a hollow bar provided with lateral nozzles projecting from the bar. The nozzles are directed towards the two sides of the vertical plane in which the bar swivels.

The apparatus disclosed in the said CH-A-602158 presents some drawbacks consisting first in the axial dimension of the main carriage, due to the need to provide its stability in spite of its arch structure.

The axial dimension of the main carriage is a limit to adopt the apparatus in those filter presses where the plates are all separated together, with the space between two adjacent plates comprised between 5 and 10 cm.

Furthermore, the swivelling of the sprayer needs the operation of a cylinder piston unit that must be properly commanded when an automatic operation of the apparatus is desired.

The need of separate independent means to swivel the sprayer results in an undesired structural and mechanical complication.

The object of the present invention is to provide a washing apparatus for filter presses more simple and effective than the known apparatuses, and suitable to be automatically driven.

A further object of the invention is to provide a washing apparatus suitable for filter presses where the space between two adjacent separated plates is from 5 to 10 cm.

Said objects are attained by an automatic wash plant as defined in the accompanying claims.

It comprises an elongate sprayer element connected to a source of pressurized wash liquid and able to swivel in a vertical plane perpendicular to the longitudinal axis of the filter press between a horizontal rest position in which it lies above the plates beyond their outline, and a vertical working position in which it is aligned with the space between two adjacent spaced-apart plates of the filter press.

The sprayer element is supported by a moving assembly positioned above the filter press and driven with two mutually perpendicular movements, these being respectively in the longitudinal direction and in the transverse direction with reference to the filter press.

Specifically, the outward part of said longitudinal movement is effected stepwise so that said sprayer element becomes positioned sequentially at all the spaces between the plates when these are spaced equidistantly apart, to be then subjected to a complete transverse outward and return movement with simultaneous feed of wash liquid.

According to a first embodiment, typically for filter presses in which all the plates are spaced apart by a single operation, said sprayer element is in the form of a hollow bar provided with nozzles alternately positioned on one side and the other thereof, so that the jets leaving said nozzles are able to strike the cloths of each individual filter chamber.

According to a further embodiment, typically for filter presses in which the plates are individually opened by a plate shifter unit, the sprayer element comprises two parallel hollow bars to be positioned on one and the other side of a plate of the filter press, they being provided with nozzles positioned towards both sides of the plate.

Finally, the plant operating cycle is controlled by a processor arranged to program the frequency with which the cycle is performed and the various stages thereof, as required.

All objects of the invention are attained by the aforedescribed means.

In this respect, firstly the washing of the filter press can be effected completely automatically with considerable time saving and optimum cleaning of the filter cloths. Secondly, inconvenient splashing of water and filtered material beyond the filter press can be prevented, as the plant and filter press can be easily provided with convenient spray shields.

Thirdly, the invention is able to operate correctly even on filter presses in which the plates are connected together without requiring them to be uncoupled from the corresponding mutual connection elements.

The characteristics and constructional merits of the invention will be apparent from the detailed description given hereinafter with reference to the accompanying figures, which illustrate two particular preferred embodiments thereof.

Figures 1 and 2 are two schematic plan views showing respectively a filter press (open) of the type in which one plate at a time is separated, and a filter press (open) in which all plates are separated in a single operation, said filter presses being shown without the plant of the invention for reasons of clarity.

Figure 3 is an enlarged schematic section on the line III-III of Figure 2, showing the filter press equipped with a plant according to the invention.

Figure 4 is a partial view of the preceding figure to an enlarged scale, showing that part of the moving assembly which moves the sprayer element transversely.

Figure 5 is a section on the line V-V of Figure 4 to an enlarged scale.

Figure 6 is a partial schematic view showing a first embodiment of the sprayer element, typically for filter presses of the type shown in Figure 2.

Figure 7 is a view similar to the preceding, showing a second embodiment of the sprayer element, typically for filter presses of the type shown in Figure 1.

Figures 1 and 2 show two usual filter presses, indicated by 100 and 101 respectively, which comprise a horizontally extending base frame 1, a plurality of identical vertical plates 2 mounted slidable along the frame longitudinal axis, a fixed head 3 and a movable head 4 operated by a cylinder-piston unit 5 and arranged to clamp said plates 2 together into a pack against said fixed head 3.

As specified heretofore, the filter press 100 is provided with a unit (not shown) for detaching the plates 2 one at a time from the pack (to the left in Figure 1) to create at any given time a space A, whereas in the filter press 101 the plates 2 are connected together, for example by two opposing lateral chains, so that if the movable head 4 is completely retracted all the plates 2 are separated, with the creation of spaces B.

To avoid unnecessary repetition and/or interpretational errors it should be noted that the plate shifter unit for the filter press 100 is indicated by way of schematic example and can be modified to facilitate the operation of the invention.

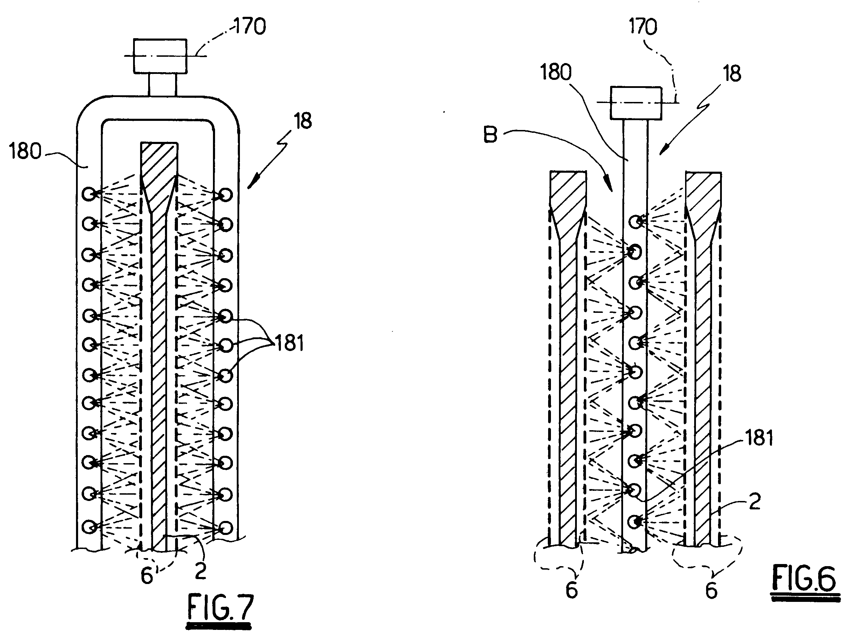

In particular the travel which each individual plate 2 has to undergo on its detachment from the pack, substantially equal to one half of said distance A, ie between 20 and 30 cm, can be modified, if necessary, to enable the sprayer element 18 to straddle the plate 2 which has just been separated, as shown in Figure 7 and as will be apparent hereinafter.

Moreover, as is usual and as shown in Figures 6 and 7, said plates 2 have their opposing faces recessed, respective filter cloths 6 being associated with said recessed faces as stated in the introduction.

As shown in Figure 3, the invention is associated with the filter press 100 or 101 via two flat vertical structures 7 which are fixed to the longitudinal members of the frame 1. At the top of said structures 7 there are two travel tracks 8 for a carriage 9, this latter being driven by a geared motor unit 10.

Specifically, said carriage 9 is arranged to undergo outward travel (from right to left in Figures 1 and 2) with stepwise movement, whereas its return travel is effected with continuous movement.

More precisely, said carriage 9 is halted at each step under the control of a sensing device 11 which is positioned below the carriage 9 and is arranged to intercept corresponding lateral counteracting members 111 provided on the plates 2 (see Figure 3).

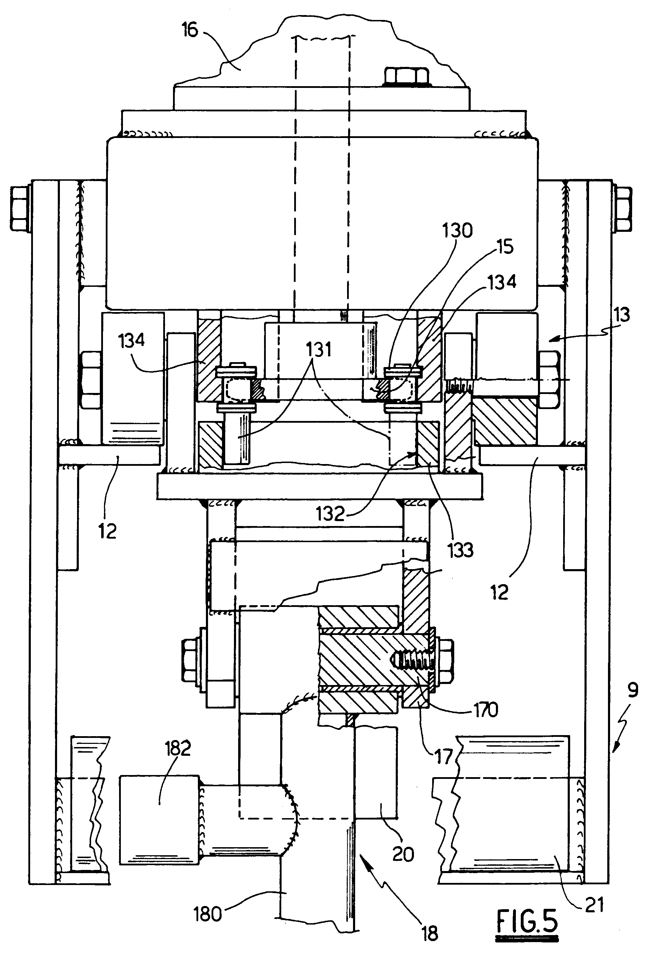

As can be seen in Figures 4 and 5, below the carriage 9 there are two parallel horizontal flat bars acting as runways for a transverse carriage 13.

This latter is coupled to a chain 130 passing endlessly about two sprockets 14 and 15 of vertical axis, the second 15 of which is driven by a geared motor unit 16.

Said unit 16 is fixed to the carriage 9, and is of the type comprising a variable speed gear to enable the travelling speed of the carriage 13 to be selected as necessary.

In addition, the outward and return portions of the chain 130 are connected to respective support and slide guides, one of said portions being coupled to the carriage 13 via a descending peg 131.

Said peg 131 is received within a slotted aperture 132 formed in a block 133 rigid with the carriage and positioned transversely to its sliding direction (Figure 5).

By virtue of said coupling 131-132 the carriage 13 can undergo a complete outward and return travel stroke without the need to reverse the direction of rotation of the unit 16.

It should be noted that the same results can be obtained by arranging the chain 130 in a vertical plane and correspondingly associating the block 133 with one side of the carriage 13. The travel strokes of this latter are practically equal to the width of the plate 2.

The carriage 13 extends below the flat bars 12, where it comprises a fork-shaped member 17. A sprayer element 18 is hinged to said member 17 on an axis 170 transverse to the sliding direction of the carriage 13.

As shown in Figures 4 and 5 the element 18 comprises, in proximity to said member 17, a high-pressure rotatable connector 182 to which a hose 19 is connected via suitable valve means.

At its other end, the hose is connected to a pumping unit (not shown) able to feed a suitable pressurized wash liquid to the element 18.

Between said connector 182 and said axis 170 there is provided a shoe 20, there being provided on the respective side of the carriage 9 a corresponding counteracting member 21.

The purpose of this latter is to position the sprayer element 18 above the plates 2 after a complete transverse outward and return movement.

In addition, in proximity to its end of travel position where the element 18 lies raised as stated, there are provided along the path of the carriage 13 two sensors for controlling the geared motor unit, there being provided on the carriage 13 a detector member (not shown) which is arranged to feed a signal to said unit 16 when the carriage arrives at said sensors.

These latter are indicated schematically by 88 and 99 in Figure 4.

Said sprayer element 18 consists of a relatively thin hollow body of length such as to reach the lower edge of the plates 2 when it is positioned vertically.

The sprayer element 18 shown in Figure 6 and typically for filter presses of the type shown in Figure 2, comprises a bar 180, for example cylindrical, with an outer diameter of 3 cm or a little more. Along those generators of the bar 180 on the side facing away from the counteracting member 21 (Figure 4) there are provided a plurality of equidistant nozzles 181 with their delivery ports alternately directed towards one and the other side of the vertical plane in which the bar 180 swivels.

Said nozzles 181 are sized such that those spray jets leaving them towards the same side of the bar are partly superimposed as shown in Figure 6, for obvious reasons.

In addition the nozzles 181 are contained within the transverse outline of the bar 180.

The sprayer element 18 shown in Figure 7 and typically for filter presses of the type shown in Figure 1, comprises two mutually parallel bars 180 each provided with a longitudinal series of equidistant nozzles 181, the delivery ports of one series being orientated towards the ports of the opposing series.

The two bars 180 lie in a plane passing through their hinging axis 170 and are spaced apart in such a manner as to be able to embrace a plate 2.

Finally, although not shown, suitable spray shields such as transparent sheets are associated with the carriage 9 and frame 1.

In addition, the wash plant of the invention is controlled by a processor which enables the frequency with which the cycle is performed and the various cycle stages to be controlled as desired.

The operation of the plant typically for filter presses 101 is as follows. The plates 2 are firstly spaced apart as shown in Figure 2 after closing the feed of the material to be filtered.

At this point the carriage 9, which is positioned above the region occupied by the cylinder-piston unit 5 (Figure 2) with the sprayer element 18 raised, receives the command to advance.

The carriage 9 halts when the device 11 intercepts the first counteracting member 111, where the element 18 lies above the first space B in the open filter press.

After this the carriage advances, with simultaneous release of the element 18 which becomes positioned vertically, said carriage being temporarily halted shortly afterwards by the effect of the sensor 88 (Figure 4).

This enables the bar 180 to become completely filled with wash liquid and then reach the desired operating pressure.

Immediately afterwards the carriage 13 undergoes a complete outward/return stroke, and is halted in its initial position by the effect of the sensor 99 which at the same time emits an enabling signal for the subsequent operation of the geared motor 10. Before the transverse carriage 13 reaches said initial position in which the bar 180 is positioned horizontally, the sensor 88 emits a signal for the purpose of closing the feed to this latter.

From this moment onwards the described stages are repeated identically at each space B, after which the carriage 9 returns (under continuous movement) to its starting position (above the cylinder-piston unit 5).

The operation of the filter press of the type indicated by 100 is totally apparent from the aforegoing.

## Claims

1. An automatic plant for washing filter presses (101) having a frame 1, a plurality of adjacent vertical plates (2) with respective filter cloths (6) supported by said frame, said plates assuming a first configuration in which they are clamped together into a pack to define a plurality of filter chambers, and a second configuration in which they are spaced apart to enable the retained material to be discharged, the said plant comprising a moving assembly (9,13) positioned above said plurality of plates and provided with an elongated sprayer element (18), said sprayer element (18) being able to swivel within a vertical plane parallel to the plates of the press (101) between a rest horizontal position in which it lies out of the space between two adjacent plates and a vertical working position in which it lies between two adjacent plates, said moving assembly undergoing longitudinal movement along the press axis and movement transverse to the press axis, characterized by two lateral flat vertical structures (7) fixed to said frame, a motorized carriage (9) travelling on two tracks (8) at the top of said structures, a counteracting member (21) provided at one side of said motorized carriage (9), a transverse motorized carriage (13) reciprocating on two flat bars supported below said carriage (9), the swivelling sprayer element (18) being supported by said transverse carriage (13) and comprising a shoe (20) which, at the end of a complete to-and-fro movement of the carriage (13) engages said counteracting element (21) in order to push the sprayer to the horizontal rest position out the space between two adjacent plates.

2. A plant according as claimed in the claim 1, characterized in that the sprayer (18) consists of a hollow bar (180) provided with at least one series of nozzles, said nozzles being contained within the transverse outline of the bar and being alternatively directed towards one and the other side of the vertical plane in which the bar swivels.

3. A plant according as claimed in the preceding claims, characterized in that the carriage (9) comprises a sensing device (11) arranged to intercept respective counteracting members (111) provided on said plates (2) in order to control the stepwise movements of the carriage (9).

4. A plant according as claimed in the preceding claims, characterized in that along the runways of said transverse carriage (13) there are provided first sensor means (88) to control the opening and the closure of the wash liquid feed to said sprayer element (18), and second sensor means (99) to halt said transverse carriage (13) on termination of a complete outward and return movement, and to cause the carriage (9) to re-start.

5. A plant as claimed in claim 1, characterised in that said nozzles (181) are arranged such that the jets leaving each pair of adjacent equiorientated nozzles are partially superimposed.

6. A plant as claimed in claim 1, characterised in that spray shields are associated with said moving assembly, to cooperate with fixed shields associated with the sides of the filter press (101).

7. A plant as claimed in the preceding claims, characterised by being provided with a programmable control processor with which sensor means are associated for the operation of the respective filter press (101).

## Patentansprüche

1. Anlage zum automatischen Reinigen von Filterpressen (101), die einen Rahmen (1) aufweisen, eine Vielzahl von benachbarten, senkrechten Platten (2) mit entsprechenden von dem Rahmen getragenen Filterstoffen (6), wobei die Platten eine erste Konfiguration einnehmen, in welcher sie zu einem Paket bzw. Bündel zusammengeklemmt sind, um eine Vielzahl von Filterkammern zu definieren, und eine zweite Konfiguration, in welcher sie voneinander beabstandet sind, um die Entnahme des gehaltenen Materials zu erlauben, wobei die Anlage einen Bewegungsaufbau (9,13) aufweist, der oberhalb der Vielzahl von Platten angeordnet ist und mit einem länglichen Sprühelement (18) versehen ist, wobei das Sprühelement (18) in der Lage ist, sich innerhalb einer vertikalen Ebene zu drehen, und zwar parallel zu den Platten der Presse (101) zwischen einer horizontalen Ruheposition, in welcher es außerhalb des Raumes zwischen zwei benachbarten Platten liegt, und einer vertikalen Arbeitsposition, in welcher es zwischen zwei benachbarten Platten liegt, wobei der Bewegungsaufbau sich einer Längsbewegung entlang der Pressenachse und einer Bewegung quer zu der Pressenachse unterzieht,
**gekennzeichnet durch**
zwei seitliche, flache, vertikale Strukturen (7), die an dem Rahmen befestigt sind, einen motorisierten Wagen (9), der auf zwei Schienen (8) an der Oberseite der Strukturen verfahrbar ist, ein entgegenwirkendes Element (21), das an einer Seite des motorisierten Wagens (9) vorgesehen ist, einen motorisierten Querwagen (13), der sich auf zwei flachen, unterhalb des Wagens (9) sich befindlichen Stangen hin- und herbewegt, wobei das sich drehende Sprühelement (18) von dem Querwagen (13) getragen ist, und einen Schuh (20) aufweist, welcher am Ende einer kompletten Hin- und Herbewegung des Wagens (13) in das entgegenwirkende Element (21) eingreift, um den Sprüher in die horizontale Ruheposition aus dem Raum zwischen zwei benachbarten Platten zu drücken.

2. Anlage nach Anspruch 1,
**dadurch gekennzeichnet,** daß
der Sprüher (18) aus einer hohlen Stange (180) besteht, die mit mindestens einer Reihe von Düsen versehen ist, wobei die Düsen innerhalb der Querumrißlinie der Stange beinhaltet sind und entweder auf die eine oder andere Seite der vertikalen Ebene, in welcher sich die Stange dreht, gerichtet sind.

3. Anlage nach den vorhergehenden Ansprüchen,
**dadurch gekennzeichnet,** daß
der Wagen (9) eine Sensoreinrichtung (11) aufweist, die dafür vorgesehen ist, entsprechende auf den Platten (2) vorgesehene entgegenwirkende Elemente (111) zu unterbrechen bzw. anzuhalten, um die schrittweisen Bewegungen des Wagens (9) zu steuern.

4. Anlage nach den vorhergehenden Ansprüchen,
**dadurch gekennzeichnet,** daß
entlang der Laufbahnen des Querwagens (13) eine erste Sensoreinrichtung (88) vorgesehen ist, um das Öffnen und das Schließen der Waschflüssigkeitszufuhr zu dem Sprühelement (18) zu steuern, sowie eine zweite Sensoreinrichtung (99), um den Querwagen (13) bei der Beendigung einer kompletten Hin- und Herbewegung anzuhalten, und um den Wagen (9) dazu zu bewegen, wieder zu starten.

5. Anlage nach Anspruch 1,
**dadurch gekennzeichnet,** daß
die Düsen (181) so angeordnet sind, daß die Strahlen, die jedes Paar von benachbarten, gleich ausgerichteten Düsen verlassen, teilweise übereinander liegen.

6. Anlage nach Anspruch 1,
**dadurch gekennzeichnet,** daß
mit dem sich bewegenden Aufbau Sprühschilder verbunden sind, um mit befestigten Schildern zu kooperieren, die mit den Seiten der Filterpresse (101) verbunden sind.

7. Anlage nach den vorhergehenden Ansprüchen,
**dadurch gekennzeichnet,** daß
sie mit einem programmierbaren Steuerprozessor versehen ist, mit welchem Sensoreinrichtungen zum Betreiben der entsprechenden Filterpresse (101) verbunden sind.

## Revendications

1. Installation automatique pour le nettoyage de filtres-presses (101) comportant un cadre 1, une pluralité de plateaux (2) verticaux adjacents avec des toiles filtres (6) respectives supportées par ledit cadre, lesdits plateaux prenant une première configuration dans laquelle ils sont verrouillés ensemble en un paquet pour définir une pluralité de chambres filtres, et une seconde configuration dans laquelle ils sont espacés les uns des autres pour permettre au matériau retenu d'être décharge, ladite installation comprenant un ensemble de déplacement (9,13) positionné au dessus de ladite pluralité de plateaux et comportant un élément (18) d'aspersion allongé, ledit élément d'aspersion (18) étant susceptible de pivoter dans un plan vertical parallèle aux plateaux de la presse (101) entre une position de repos horizontale dans laquelle il se situe en dehors de l'espace compris entre deux plateaux adjacents et une position de travail verticale dans laquelle il se situe entre deux plateaux adjacents, ledit ensemble de déplacement effectuant un mouvement longitudinal le long de l'axe de la presse et un mouvement transversal par rapport à l'axe de la presse, caractérisée par deux structures verticales latérales plates (7) fixées audit cadre, un chariot motorisé (9) se déplaçant sur deux pistes (8) au sommet desdites structures, un organe de contre-réaction (21) prévu d'un côté dudit chariot motorisé (9), un chariot motorisé transversal (13) se déplaçant en mouvement alternatif sur deux barres plates supportées en dessous dudit chariot (9), l'élément (18) d'aspersion pivotant étant supporté par ledit chariot transversal (13) et comprenant un patin (20) qui, à l'extrémité du mouvement complet d'aller et de retour du chariot (13), porte contre ledit élément de contre-réaction (21), de façon à pousser le dispositif d'aspersion vers la position de repos horizontale en dehors de l'espace compris entre deux plateaux adjacents.

2. Installation selon la revendication 1, caractérisée en ce que ledit dispositif d'aspersion (18) est constitué par une barre creuse (180) comportant au moins une série de buses, lesdites buses étant contenues à l'intérieur du contour transversal de la barre et étant dirigées de façon alternative en direction de l'un et de l'autre côté du plan vertical dans lequel pivote la barre.

3. Installation selon l'une des revendications précédentes, caractérisée en ce que le chariot (9) comprend un dispositif de détection (11) disposé de façon à intercepter les organes de contre-réaction respectifs (111) prévus sur les plateaux (2), de façon à contrôler les mouvements de déplacement par pas du chariot (9).

4. Installation selon l'une quelconque des revendications précédentes, caractérisée en ce que, le long des trajets de déplacement dudit chariot transversal (13), sont prévus des premiers moyens capteurs (88) pour contrôler l'ouverture et la fermeture de l'alimentation du liquide de nettoyage en direction dudit élément d'aspersion (18), et des seconds moyens capteurs (99) pour arrêter ledit chariot transversal (13) lors de la terminaison d'un mouvement complet d'aller et de retour, de façon à commander le redémarrage du chariot (9).

5. Installation selon la revendication 1, caractérisée en ce que lesdites buses (181) sont disposées de telle façon que les jets qui quittent chaque paire de buses également orientées adjacentes sont partiellement superposés.

6. Installation selon la revendication 1, caractérisée en ce que des boucliers d'aspersion sont associés audit ensemble de déplacement de façon à coopérer avec des boucliers fixes associés aux côtés du filtre presse.

7. Installation selon l'une quelconque des revendications précédentes, caractérisée en ce qu'elle comporte un processeur de commande programmable auquel sont associés des moyens capteurs pour le fonctionnement du filtre presse respectif (101).
